# EUROPEAN PATENT SPECIFICATION

(11) **EP 0 872 187 B1**
(45) Date of publication and mention of the grant of the patent: **01.09.1999**
(21) Application number: 97202420.2
(22) Date of filing: 04.08.1997
(51) Int. Cl.: A23G 1/00, A23G 1/18, A23G 1/04

(54) **Apparatus for continuous tempering of cacao-butter-containing or other fatcontaining chocolate-like mass**
Vorrichtung zur kontinuierlichen Temperierung von kakaobutterhaltigen oder schokoladenähnlicher fetthaltiger Masse
Appareil pour le conditionnement thermique continu de masses contenant du beurre de cacao ou de masses du type chocolat contenant des graisses

(30) Priority: 17.04.1997 DK 43097
(43) Date of publication of application: 21.10.1998
(73) Proprietor: AASTED-MIKROVERK APS, 3520 Farum (DK)
(72) Inventor: Aasted, Lars, 2920 Charlottenlund (DE)
(74) Representative: Heiden, Finn

(56) References cited:
- EP-A- 0 275 837
- EP-A- 0 289 849
- EP-A- 0 685 168
- DE-B- 1 079 438
- US-A- 3 777 807
- US-A- 4 998 464
- US-A- 5 450 786

## Description

The present invention concerns an apparatus for continuous tempering of cacao-butter-containing or other fat-containing, chocolate-like mass flowing therethrough, wherein a predetermined, controlled cooling or heating stage of the mass is provided in a cooling zone with a plurality of cooling surfaces, and a subsequent heating zone with a plurality of heating surfaces for the mass during its passage through at least two sections of mass treatment chambers in succession with associated cooling or heating medium chambers.

The medium chambers removes heat energy from or adds heat energy to the cooling surfaces or the heating surfaces, respectively, by means of a medium, which is controlled to a predetermined temperature and/or a predetermined flow through the medium chamber.

During the flow of mass and the passage through the sections exchange of heat energy via the cooling surfaces and the heating surfaces, respectively, is conducted, and heat transmission between the medium in a medium chamber and the mass in an adjacent mass treatment chamber is thereby performed.

EP 685 168 discloses an apparatus for continuous tempering of chocolate, wherein the cooling surfaces of a second cooling zone are inserted between the initial and final cooling surfaces of the first cooling zone. The temperature of the cooling water in the first cooling zone will alter when changes in the temperature of the mass as well as when changes in the amount of mass flow per time unit occurs.

US 5,450,786 discloses a conching device for refining chocolate. The conching device comprises individual compartments divided by partition walls. However, though there are arranged through holes for the at least one rotor shaft in the partition walls, sealings are furthermore provided, so that the chocolate is prevented from trespassing out of the openings in the partition walls from one compartment to the other. Consequently, US 5,450,786 does not disclose an apparatus having mass treatment chambers with through passages for the flow of mass from chamber to chamber.

US 3,777,807 discloses an apparatus for tempering liquid chocolate. The chocolate is first exposed for one temperature for a predetermined period of time and subsequently exposed for a second temperature for a predetermined period of time. This is carried out in a single chamber. Furthermore, an exterior insulation for isolating against the surroundings is disclosed.

By the known types of tempering apparatuses the heat is free to transmit between the particular adjacent sections of mass treatment chambers and the associated cooling or heat medium chambers, with the result of a substantial, uncontrolled heat transmission. It has been difficult to control a tempering process inside a specific section, without considering the influence of the heat transmission between the section in question and the adjacent sections.

The matter could particularly be, that the heat energy freely flows between a section performing a cooling stage of the mass and an adjacent section performing a heating stage of the mass. This is due to the fact, that the section with the heating stage of the mass performs surplus of heat energy, in comparison to the section with the cooling stage. A predetermined tempering process in each of the two sections are therefore impossible to control exactly.

Particularly for the crystal formation section of tempering apparatuses is it important to determine and exactly control a predetermined tempering process of the mass, so the high quality of the finally tempered mass is achieved. By the known types of tempering apparatuses it has proven difficult to control the tempering process in the crystal formation section exactly, as the heat flows freely from the medium or the mass chamber of the adjacent sections to the crystal formation section and thereby influences the tempering process in said section.

The new and characterizing of the apparatus for continuous tempering of chocolate-like masses according to the invention is, that in relation to said sections of mass treatment chambers is arranged at least one heat transmission barrier, and that said heat transmission barrier extends transversely to the chocolate mass flow through the apparatus.

During operation of the tempering apparatus the heat transmission barrier reduces the heat transmission between the sections in between which it is arranged to an essentially eliminating and almost imperceptible level. A substantially better controlled tempering process is therefore provided inside a specific section, without having to consider the heat transmission between said section and the adjacent sections as was necessary before.

The heat transmission between the mass chamber and the medium chamber within a specific section may therefore be predetermined to a far higher extent, as it essentially only depend on the actual heat transmission, which takes place inside the section in question in relation with which the heat transmission barrier is arranged and is not affected by an unpredictable heat transmission from other sections.

It has been found surprising for the person skilled in the art, that by arranging a heat transmission barrier in relation to a section, one is able to control a tempering process without taking into consideration what is performed in the adjacent sections.

According to the invention may in a particularly expedient manner be arranged a heat transmission barrier between a section with cooling surfaces and a section with heating surfaces in the apparatus, which diminish or essential eliminates the heat transmission between the sections.

The heat transmission barrier may also be arranged between a mass treatment chamber and a medium chamber of an adjacent section, whereby the amount of the heat transmission between the mass in the mass chamber of the section and the medium in the medium chamber of an adjacent section is controlled, and thereby reduces to a minimum. In that way it is obtained, that the mass in the mass treatment chamber is not affected by the temperature of the medium in the medium chamber of the adjacent section, and neither "steals" heat energy from the medium nor in undesirable manner adds heat energy to the medium.

By another embodiment according to the invention it has been found expedient, that the heat transmission barrier is arranged between a mass treatment chamber and a medium chamber of an adjacent section, where the medium is controlled to a turbulent flow through the medium chamber. Media with turbulent flow cause a particularly efficient heat transmission, and it is important that a barrier against such an efficient medium chamber can be arranged.

The heat transmission barrier may as well be arranged between a mass treatment chamber, wherein the mass flow in one direction, and a medium chamber of an adjacent section, wherein the medium flow in the opposite direction to that of the mass, so that the heat transmission between the two adjacent chambers are controlled and thereby reduces to a minimum.

According to the invention may in a particularly expedient manner be arranged a heat transmission barrier in relation to a section, wherein crystals are formed in the chocolate mass, and where it is particularly important to control the crystal formation exactly, without the adjacent sections are affecting the tempering process in the section with an unpredictable heat energy.

An expedient and efficient operation of the apparatus is particularly achieved by arranging the heat transmission barrier between a section with cooling surfaces and an adjacent section, by which section with cooling surfaces the cooling water temperature of the associated cooling medium chamber is controlled to a constant level in the interval of 14-18 °C, as this embodiment gives a substantial improved control over the heat transmission in a section with cooling surfaces.

According to the invention it has been found expedient and simple, that the heat transmission barrier is arranged in a medium chamber in the apparatus, which prevents the heat transmission between two adjacent mass treatment chambers, and thereby making available the opportunity of altering an existent tempering apparatus without substantially construction-wise changes.

By another embodiment according to the invention it has been found expedient, to arrange a heat transmission barrier in a mass treatment chamber. Hereby a division of the mass treatment chamber may be provided, so that the chocolate mass can be exposed for two different tempering stages in the same mass treatment chamber. This embodiment also makes available the opportunity of altering an existent tempering apparatus without substantially construction-wise changes.

An expedient embodiment according to the invention is achieved by the heat transmission barrier being rotably arranged. By it the heat transmission barrier may be an integrated part of the mixing tool of the apparatus. The barrier may divide a mass treatment chamber, so that the mass will be affected by a certain tempering stage at the one side of the barrier and by another stage at the other side of the barrier.

By an expedient embodiment of the heat transmission barrier according to the invention, said heat transmission barrier may comprise a solid material, whereby a barrier is provided, which secure a minimum of heat transmission between the sections, that the barrier is related to.

By further expedient embodiments the heat transmission barrier comprise either insulating material or a heat reflective material.

According to the invention may there in a particularly expedient manner be arranged a heat transmission barrier, which extends over mainly the entire surface extension of the adjacent section transversely to the chocolate mass flow through the apparatus, and which heat transmission barrier just lay open a passage for the flow of chocolate mass therethrough, so that the heat transmission, which is present between two adjacent sections will be reduced to the heat being transmitted by the mass.

The invention will be explained below with reference to particularly preferred embodiments as well as the drawing, by which
fig. 1 is a schematic lateral view of the construction of a chocolate tempering apparatus,
fig. 2 is a view of a part of the construction of a chocolate tempering apparatus, shown in fig. 1,
fig.3 is a view of a second embodiment of a construction of a chocolate tempering apparatus, shown in the same way as in fig. 1 and fig. 2,
fig. 4 is a view of a third embodiment of a construction of a chocolate tempering apparatus, shown in the same way as in fig. 1, 2 and 3,
fig. 5 is a view of a fourth embodiment of a construction of a chocolate tempering apparatus, shown in the same way as in fig. 1, 2, 3 and 4, and
fig. 6 is a more detailed view of the apparatus shown in fig. 3, where the insulating barrier is placed directly in the cooling medium chamber.

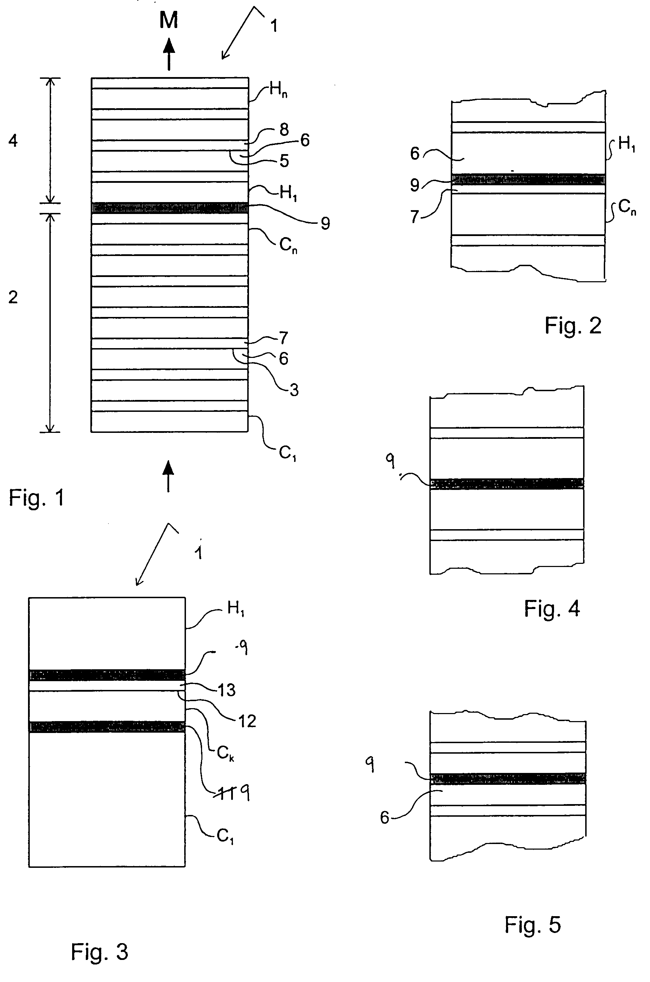

The apparatus 1 of fig. 1 is adapted for continuous tempering of cacao-butter-containing or other fat-containing, chocolate-like mass flowing therethrough, and wherein a predetermined, controlled cooling- or heating-stage of the mass is provided. The apparatus comprise a cooling zone 2 comprising a plurality of cooling surfaces 3, and a subsequent heating zone 4 comprising a plurality of heating surfaces 5 for the mass during its passage through at least two sections C₁-Cₙ; H₁-Hₙ of mass treatment chambers 6 in succession with associated cooling- or heating medium chambers 7, 8.

By the embodiment shown in fig. 1, the sections C₁-Cₙ are forming the cooling zone 2 with a plurality of cooling surfaces 3, and the sections H₁-Hₙ are forming a subsequent heating zone 4 with a plurality of heating surfaces 5 for the mass during its passage through the apparatus 1. The flow direction M of the mass is in fig. 1 shown by arrows.

Between the cooling zone 2 and the heating zone 4 is placed a heat transmission barrier 9, as shown with the embodiment of fig. 1, which heat transmission barrier is arranged to eliminate the heat transmission between the sections C₁-Cₙ of the cooling zone 2 and the sections H₁-Hₙ of the heating zone 4.

By this embodiment the matter is, that the said heat transmission barrier 9 is arranged between a section Cₙ with cooling surfaces 3 and a section H₁ with heating surfaces 5. Thereby, the heat transmission from the section H₁ to the section Cₙ diminishes, as there particularly is a high heat transmission between two sections with strongly diverging temperature conditions.

By the embodiment shown in fig. 1 the heat transmission barrier 9 is further shown as arranged between a mass treatment chamber 6 and medium chamber 7 of an adjacent section Cₙ, as it is shown clearly by fig. 2. By this embodiment the heat transmission barrier 9 diminishes the heat transmission between the mass treatment chamber 6 and the medium chamber 7, so that the mass in the mass treatment chamber 6 is not affected by the temperature in the medium chamber 7.

When the medium in the medium chamber 7 is controlled to a turbulent flow or when the medium is controlled to flow in the opposite direction to that of the mass in the mass treatment chamber 6, the matter is the provision of efficient medium chambers 7, which due to high induce of heat energy affects the mass. Here, it is particularly important to arrange a heat transmission barrier 9, so that the heat energy does not transmit freely between the efficient medium chamber 7 and the mass treatment chamber 6 of the adjacent section.

By other embodiments a heat transmission barrier 9 may be arranged somewhere in the cooling or the heating zone 2, 4.

In fig. 3 is shown an embodiment of the apparatus 1, which has been found expedient by arranging the heat transmission barriers 9 in relation to a section Cₖ, where crystals are formed. This embodiment performs a substantially improved control over the heat transmission in the zone Cₖ, where in particularly the β-crystal formation in the chocolate mass takes place, which apart from this is of vital importance for the quality of the finally tempered chocolate mass. It is particularly important to be able to control a predetermined tempering process in the section Cₖ, so that the chocolate mass is not affected by the medium chambers of the adjacent sections C₁, H₁. Often, the section Cₖ is arranged in the apparatus 1 between a cooling zone, where the chocolate mass is abruptly cooled via low temperature of the medium in the medium chambers and a heating zone, where chocolate mass is heated. By such an arrangement the medium chambers of the adjacent sections C₁, H₁ performs substantially diverging temperatures compared to that of the section Cₖ, so that it being important to arrange heat transmissions barriers 9, which "wraps" the section Cₖ.

By another embodiment of the apparatus 1, the heat transmission barriers 9 are arranged between a section Cₖ with cooling surfaces 12 and the adjacent sections C₁, H₁, by which section Cₖ the cooling water temperature of the adjacent cooling medium chamber 13 is controlled to a constant level in the interval of 14-18 °C. Thereby is obtained, that the heat energy of the adjacent sections do not influence the section Cₖ, so that the cooling water temperature can be kept in the said interval. The section Cₖ could for example comprise the crystal formation area.

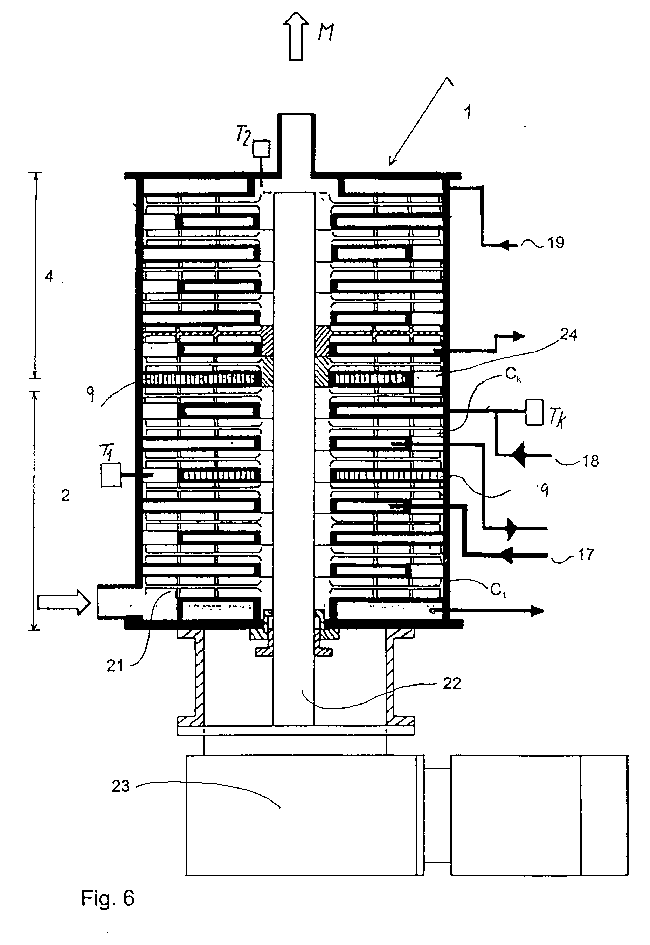

By the embodiments shown in fig.4 and 6 are the heat transmission barriers 9 arranged directly in a medium chamber. Thereby the existing tempering apparatuses may in a simple manner according to the invention be rebuild, and by it obtain a substantially better controlled tempering process.

By the embodiment of fig. 5 is the heat transmission barrier 9 arranged in a mass treatment chamber 6. Thereby is obtained a partitioning of the mass treatment chamber 6, so that the chocolate mass may be exposed to two different tempering stages in the same mass treatment chamber.

By another embodiment the heat transmission barrier is rotably arranged.

The heat transmission barrier 9 may advantageously be arranged in the form of a mixing tool in the mass treatment chamber, by moulding the heat transmission barrier 9 with the form of a disc, which is provided with means for mixing the chocolate mass and to lead the mass continuous through the apparatus. Thereby, it is possible to expose the chocolate mass for a cooling stage on the one side of the heat transmission barrier at the same time as with the mass on the other side of the barrier is exposed to a heating stage. By having the mass exposed to two different tempering processes in the same mass treatment chamber is further obtained, that the extension of the apparatus may be made smaller, as a lesser number of cooling surfaces or heating surfaces, respectively, are necessary.

Fig. 6 further shows in more details a chocolate tempering apparatus 1 with the same construction as the one shown in fig. 3. The apparatus 1 is a modified tempering apparatus of known type, by which there are connected separate controllable cooling medium circuit 17, 18 to the sections C₁, Cₖ of the cooling zone 2. In relation to the cooling medium circuit 17 there is placed a sensor T₁, for measuring the chocolate temperature at the outlet of the section C₁. To the heating zone 4 there is related a separate controllable heat medium circuit 19 with a sensor T₂ for measuring the chocolate temperature at the outlet of the heating zone 4. A sensor Tₖ for measuring the water temperature in the cooling medium chamber associated to the section Cₖ is arranged by the cooling medium circuit 18, where the water temperature is controlled to a constant level in the interval of 14-18 °C. Common for all the medium circuits 17, 18, 19 are, that they are arranged to flow in the opposite direction to that of the flow direction M of the chocolate mass. By the new embodiment of this apparatus 1 there is in the medium chambers placed two heat transmission barriers 9. The heat transmission barriers 9 "wraps" by it the section Cₖ, so that the heat transmission transmitted from the adjacent sections is controlled and reduced to a minimum.

The apparatus shown in fig. 1-6 belongs to the types of vertical raised tempering apparatuses, where the chocolate mass M flows in vertical direction through the apparatus under influence of mixing tools 21 in each mass treatment chamber, see fig. 6. The mixing tools 21 are rotated by means of a vertical through shaft 22, which is driven by a motor 23.

Within the inventive idea, the inventive matter could as well apply for other types of tempering apparatuses, those being horizontal.

According to the invention the heat transmission barrier 9 may comprise a solid material. A particularly advantage with the heat transmission barrier 9 is provided when comprises an isolating or a heat reflective material.

The heat transmission barrier may also be formed as an evacuated room, or a room with vacuum.

The matter could also be, that the heat transmission barrier is formed as a room or a chamber containing a liquid or a gas. The liquid or the gasses condition can thereby be controlled to achievement of an efficient heat transmission barrier. For example by controlling the gasses temperature or pressure. The matter could be gasses such as nitrogen.

The heat transmission barrier may also comprise thin layers of heat reflecting materials, those being layers of metal, plastic or painting with a heat reflecting property. The matter could be a metal foil layer. Especially are layers of precious metal effective.

A heat transmission barrier, which comprises an isolating material placed between layers of heat reflecting materials, such as metal foil has been found surprisingly effective.

In the shown embodiments the matter could particularly be, that the heat transmission barrier 9 extends over mainly the entire surface extension of the adjacent section transversely to the chocolate mass flow M through the apparatus, and only lay open a passage 24 for the flow of chocolate mass therethrough. By it, it is obtained, that the heat transmission, which is present between two adjacent sections is diminished to that of the mass transmitted heat.

By other embodiments according to the idea of the invention the matter could be, that the heat transmission barrier is arranged between to adjacent medium chambers without intermediary mass treatment chambers.

## Claims

1. An apparatus (1) for continuous tempering of cacao-butter-containing or other fat-containing, chocolate-like mass flowing therethrough, wherein a predetermined, controlled cooling- or heating-stage of the mass is provided in a cooling zone (2) with a plurality of cooling surfaces (3), and a subsequent heating zone (4) with a plurality of heating surfaces (5) for the mass during its passage through at least two sections (C₁-Cₙ; H₁-Hₙ) of mass treatment chambers (6) in succession with associated cooling- or heating medium chambers (7,8), **characterized** in, that in relation to said sections (C₁-Cₙ; H₁-Hₙ) of mass treatment chambers (6) is arranged at least one heat transmission barrier (9), and that said heat transmission barrier (9) extends transversely to the chocolate mass flow through the apparatus (1).

2. An apparatus according to claim 1, **characterized** in, that the heat transmission barrier (9) is arranged between a section (Cₙ) with cooling surfaces (3) and a section with heating surfaces (5).

3. An apparatus according to claim 1 or 2, **characterized** in, that the heat transmission barrier (9) is arranged between a mass treatment chamber (6) and a medium chamber (7) of an adjacent section (Cₙ).

4. An apparatus according to claim 1 or 2, **characterized** in, that the heat transmission barrier (9) is arranged between a mass treatment chamber (6) and a medium chamber (7) of an adjacent section (Cₙ), wherein the medium is controlled to turbulent flow through the medium chamber (7).

5. An apparatus according to claim 1 or 2, **characterized** in, that the heat transmission barrier (9) is arranged between a mass treatment chamber (6), where the mass flow in one direction and a medium chamber (7) of an adjacent section (Cₙ), where the medium flows in the opposite direction of the mass.

6. An apparatus according to claim 1, **characterized** in, that the heat transmission barrier (9) is arranged in relation to a section (Cₖ), wherein crystals are formed.

7. An apparatus according to claim 1, **characterized** in, that the heat transmission barrier (9) is arranged between a section (Cₖ) with cooling surfaces (12) and an adjacent section (H₁), by which section (Cₖ) the cooling water temperature of the associated cooling medium chamber (13) is controlled to a constant level in the interval of 14-18 °C,.

8. An apparatus according to claim 1, **characterized** in that the heat transmission barrier (9) is arranged in a medium chamber.

9. An apparatus according to claim 1, **characterized** in that the heat transmission barrier (9) is arranged in a mass treatment chamber (6).

10. An apparatus according to one or more of the claims 1-9, **characterized** in that the heat transmission barrier is rotably arranged.

11. An apparatus according to one or more of the claims 1-10, **characterized** in that the heat transmission barrier (9) comprises a solid material.

12. An apparatus according to one or more of the claims 1-10, **characterized** in that the heat transmission barrier (9) comprises an insulating material.

13. An apparatus according to one or more of the claims 1-10, **characterized** in that the heat transmission barrier (9) comprises a heat reflective material.

14. An apparatus according to one or more of the claims 1-10, **characterized** in that the heat transmission barrier (9) extends over mainly the entire surface extension of the adjacent section transversely to the chocolate mass flow through the apparatus, and lay open a passage (24) for the flow of chocolate mass there through.

## Patentansprüche

1. Vorrichtung (1) zur kontinuierlichen Temperierung von kakaobutterhaltiger oder sonstiger fetthaltiger, schokoladeartiger Masse, die durch diese fließt, wobei eine vorbestimmte, kontrollierte Kühlungs- oder Erhitzungsphase der Masse in einem Kühlbereich (2) mit mehreren Kühlflächen (3) und einem darauf folgenden Erhitzungsbereich (4) mit mehreren Erhitzungsflächen (5) für die Masse während ihres Durchgangs durch mindestens zwei Sektionen (C₁- Cₙ; H₁ - Hₙ) mit Masseverarbeitungskammern (6), auf die entsprechende Kühlungs- bzw. Erhitzungsmediumkammern (7, 8) folgen, vorgesehen ist,
**dadurch gekennzeichnet, daß** in Bezug auf die genannten Sektionen (C₁ - Cₙ; H₁ - Hₙ) mit Masseverarbeitungskammern (6) mindestens eine Wärmeübertragungsschranke (9) angeordnet wird und daß diese Wärmeübertragungsschranke (9) sich quer zu dem Schokoladenmassefluß durch die Vorrichtung (1) erstreckt.

2. Vorrichtung nach Anspruch 1, **dadurch gekennzeichnet, daß** die Wärmeübertragungsschranke (9) zwischen einer Sektion (Cₙ) mit Kühlflächen (3) und einer Sektion mit Erhitzungsflächen (5) angeordnet ist.

3. Vorrichtung nach Anspruch 1 oder 2, **dadurch gekennzeichnet, daß** die Wärmeübertragungsschranke (9) zwischen einer Masseverarbeitungskammer (6) und einer Mediumkammer (7) einer angrenzenden Sektion (Cₙ) angeordnet ist.

4. Vorrichtung nach Anspruch 1 oder 2, **dadurch gekennzeichnet, daß** die Wärmeübertragungsschranke (9) zwischen einer Masseverarbeitungskammer (6) und einer Mediumkammer (7) einer angrenzenden Sektion (Cₙ) angeordnet ist, in der das Medium in eine Wirbelstrombewegung durch die Mediumkammer (7) gebracht wird.

5. Vorrichtung nach Anspruch 1 oder 2, **dadurch gekennzeichnet, daß** die Wärmeübertragungsschranke (9) zwischen einer Masseverarbeitungskammer (6), in der die Masse in einer Richtung fließt, und einer Mediumkammer (7) einer angrenzenden Sektion (Cₙ), in der das Medium in der entgegengesetzten Richtung wie die Masse strömt, angeordnet ist.

6. Vorrichtung nach Anspruch 1, **dadurch gekennzeichnet, daß** die Wärmeübertragungsschranke (9) in Bezug auf eine Sektion (Cₖ) angeordnet ist, in der Kristalle gebildet werden.

7. Vorrichtung nach Anspruch 1, **dadurch gekennzeichnet, daß** die Wärmeübertragungsschranke (9) zwischen einer Sektion (Cₖ) mit Kühlflachen (12) und einer angrenzenden Sektion (H₁) angeordnet ist, wobei durch diese Sektion (Cₖ) die Kühlwassertemperatur der damit verbundenen Kühlungsmediumkammer (13) auf einer konstanten Höhe zwischen 14°C und 18 °C gehalten wird.

8. Vorrichtung nach Anspruch 1, **dadurch gekennzeichnet, daß** die Wärmeübertragungsschranke (9) in einer Mediumkammer angeordnet ist.

9. Vorrichtung nach Anspruch 1, **dadurch gekennzeichnet, daß** die Wärmeübertragungsschranke (9) in einer Masseverarbeitungskammer angeordnet ist.

10. Vorrichtung nach einem oder mehreren der Ansprüche 1 bis 9, **dadurch gekennzeichnet, daß** die Wärmeübertragungsschranke (9) drehbar angeordnet ist.

11. Vorrichtung nach einem oder mehreren der Ansprüche 1 bis 10, **dadurch gekennzeichnet, daß** die Wärmeübertragungsschranke (9) aus festem Material besteht.

12. Vorrichtung nach einem oder mehreren der Ansprüche 1 bis 10, **dadurch gekennzeichnet, daß** die Wärmeübertragungsschranke (9) aus isolierendem Material besteht.

13. Vorrichtung nach einem oder mehreren der Ansprüche 1 bis 10, **dadurch gekennzeichnet, daß** die Wärmeübertragungsschranke (9) aus hitzereflektierendem Material besteht.

14. Vorrichtung nach einem oder mehreren der Ansprüche 1 bis 10, **dadurch gekennzeichnet, daß** die Wärmeübertragungsschranke (9) sich im Prinzip über die gesamte Flächenausdehnung der angrenzenden Sektion quer zum Fluß der Schokoladenmasse durch die Vorrichtung erstreckt und dabei einen Durchlaß (24) für den Durchfluß der Schokoladenmasse durch sie freiläßt.

## Revendications

1. Appareil (1) pour le conditionnement thermique continu d'une masse, telle que du chocolat, contenant du beurre de cacao ou un autre corps gras, qui s'écoule dans l'appareil, où est prévue une étape prédéterminée de contrôle du refroidissement ou du chauffage dans une zone de refroidissement (2) qui comporte une pluralité de surfaces de refroidissement (3), puis une zone de chauffage (4) qui comporte une pluralité de surfaces de chauffage (5) de la masse pendant son passage dans au moins deux sections (C₁-Cₙ; H₁-Hₙ) de chambres (6) de traitement de la masse succédant à des chambres associées de milieu de refroidissement ou de chauffage (7, 8), **caractérisé en ce** qu'en relation avec lesdites sections (C₁-Cₙ; H₁-Hₙ) des chambres (6) de traitement de la masse, est prévue au moins une barrière (9) de transmission de chaleur et en ce que ladite barrière (9) de transmission de chaleur est orientée transversalement au sens d'écoulement de la masse de chocolat dans l'appareil (1).

2. Appareil suivant la revendication 1, **caractérisé en ce** que la barrière (9) de transmission de chaleur est prévue entre une section (Cₙ) avec surfaces de refroidissement (3) et une section avec surfaces de chauffage (5).

3. Appareil suivant la revendication 1 ou 2, **caractérisé en ce** que la barrière (9) de transmission de chaleur est prévue entre une chambre (6) de traitement de la masse et une chambre de milieu (7) d'une section adjacente (Cₙ).

4. Appareil suivant la revendication 1 ou 2, **caractérisé en ce** que la barrière (9) de transmission de chaleur est prévue entre une chambre (6) de traitement de la masse et une chambre de milieu (7) d'une section adjacente (Cₙ), où on commande le milieu en écoulement turbulent dans la chambre de milieu (7).

5. Appareil suivant la revendication 1 ou 2, **caractérisé en ce** que la barrière (9) de transmission de chaleur est prévue entre une chambre (6) de traitement de la masse où la masse s'écoule dans un sens, et une chambre de milieu (7) d'une section adjacente (Cₙ) où le milieu s'écoule dans le sens opposé à la masse.

6. Appareil suivant la revendication 1, **caractérisé en ce** que la barrière (9) de transmission de chaleur est prévue en relation avec une section (Cₖ) dans laquelle se forment des cristaux.

7. Appareil suivant la revendication 1, **caractérisé en ce** que la barrière (9) de transmission de chaleur est prévue entre une section (Cₖ) avec des surfaces de refroidissement (12) et une section adjacente (H), la section (Cₖ) étant telle que la température de l'eau de refroidissement de la chambre associée (13) de milieu de refroidissement est contrôlée à un niveau constant dans l'intervalle de 14 à 18 °C.

8. Appareil suivant la revendication 1, **caractérisé en ce** que la barrière (9) de transmission de chaleur est prévue dans une chambre de milieu.

9. Appareil suivant la revendication 1, **caractérisé en ce** que la barrière (9) de transmission de chaleur est prévue dans une chambre (6) de traitement de la masse.

10. Appareil suivant une ou plusieurs des revendications 1 à 9, **caractérisé en ce** que la barrière (9) de transmission de chaleur est prévue rotative.

11. Appareil suivant une ou plusieurs des revendications 1 à 10, **caractérisé en ce** que la barrière (9) de transmission de chaleur comprend une matière solide.

12. Appareil suivant une ou plusieurs des revendications 1 à 10, **caractérisé en ce** que la barrière (9) de transmission de chaleur comprend une matière isolante.

13. Appareil suivant une ou plusieurs des revendications 1 à 10, **caractérisé en ce** que la barrière (9) de transmission de chaleur comprend une matière réfléchissant la chaleur.

14. Appareil suivant une ou plusieurs des revendications 1 à 10, **caractérisé en ce** que la barrière (9) de transmission de chaleur occupe essentiellement la surface entière de la section adjacente, orientée transversalement à l'écoulement de la masse de chocolat dans l'appareil, et laisse un passage (24) ouvert pour que la masse de chocolat s'y écoule.
